# EUROPEAN PATENT APPLICATION

(11) **EP 4 835 200 A1**
(43) Date of publication of application: **04.11.2026**
(21) Application number: 26154229.4
(22) Date of filing: 26.01.2026
(51) Int. Cl.: E02D 29/14, E04B 9/00

(54) **COVER PANEL INCLUDING A COVER THAT CAN BE REMOVED, AND APPLICATIONS OF THE SAME**

(30) Priority: 02.05.2025 IN 202521042668
(71) Applicant: Kairish Innotech Private Ltd., Mumbai 400021 (IN)
(72) Inventor: Dadachanji, Rishad Kairus, 400005 Mumbai (IN); Tandel, Monik Vinodbhai, 400021 Mumbai (IN)
(74) Representative: 2K Patent Partnerschaft mbB

(57) **Abstract**

A cover panel 1 for covering an opening comprises a frame 5 defining the opening 6, and a cover 3 covering the opening in a closed condition. The frame 5 retains the cover 3 in the closed condition, and an actuating member 25 is used to switch the cover 3 to an opened condition in which it can be removed from the frame 5 to provide access to a back side BS thereof via the opening 6.

The actuating member 25 is pivotably supported about a pivot axis 31 extending in parallel with a plane of the cover panel. Pivoting the actuating member 25 about its pivot axis 31 drives a displacement of the cover 3 perpendicular to the frame 5 to the opened condition, for removal of the cover 3 from the frame 5.

## Description

### FIELD OF INVENTION

The present invention generally relates to cover panels that can be opened to provide access to a back side, and more specifically relates to cover panels comprising a frame, which defines an opening, and a cover retained in the frame, wherein the cover can be opened from a front side thereof and can be removed to provide access to a back side via the opening, e.g. for repair or maintenance purposes. Further aspects of the present invention relate to specific uses of such a cover panel.

### BACKGROUND OF INVENTION

Such cover panels may be provided e.g. in side-walls of classified areas, such as clean rooms, or as parts of housings, such as machine housings, to ensure safe and hygienic working conditions when the cover is closed but to enable access to the back side via an opening, if required. Often there is the need that only authorized personnel can open and remove the cover, but not personnel not having the permission for doing so. Such restrictions may be required particularly for applications in very expensive machines or in classified areas, such as clean rooms, e.g. for removal of filter covers for replacement of air filters positioned at a rear side thereof. In such applications, surfaces that are closed completely and without apertures may be preferred to ensure hygienic working conditions.

EP 0 291 783 B1 discloses a filter module for cleanroom ceilings and walls or the like, comprising a high-efficiency particulate air filter that can be fixed exchangeably against the pressure chamber or a pressure box by means of clamping and sealing elements. Sealing areas are provided between the frame of the particulate filter and the pressure chamber and the pressure box, respectively, which define between them a spacing area that is open only into the ceiling or wall cavity. The sealing areas include a horizontal flange and a cover held in a mounting frame and penetrated from top to bottom by threaded bolts, which also pass through associated holes in the flanges of the mounting frame. Other flanges of the mounting frame are clamped against a seal by means of wing nuts, which interact with the threaded bolts. Opening the filter module may be a time-consuming procedure requiring unthreading several wing nuts.

US 5 993 311 A discloses a clean room ceiling structure comprising a support structure, filter units comprising a filter frame and a filter secured in said filter frame, wherein the filter frames are connected to the support structure. The support structure has at least one sealing stay extending into at least one fluid groove and comprises holders and rails. The configuration of the ceiling structure is relatively complex and involves many different components.

Many different opening mechanisms are known from the prior art, also mechanisms that involve pivoting of a cover or the combination of a linear displacement and pivoting, for providing access to a back volume. Such mechanisms include mechanisms for a vehicle sun roof with a cover intended to cover a roof opening when in the closed position and to be both pushed upwards at its rear edge so as to be at least elevated relative to its closed position in an opened position, such as disclosed e.g. in US 6 158 803 A or US 2004 232 737 A1.

A similar opening mechanism is disclosed in DE 10 2023 116 334 A1, for use in a loading flap unit of a motor vehicle, having a displacement mechanism which is designed to displace the vehicle flap unit between a closed position closing an opening in a vehicle body and a release position releasing the opening within the vehicle body.

US 4 970 836 A discloses a cover panel covering an opening. Screw members extend through the cover panel, and screwing / unscrewing the screw members actuates a spring plate that is pivotably coupled to the rear side of the cover panel and is configured to release the cover panel.

EP 1 961 891 B1 discloses a cover panel that comprises two pivotable latching members that are accessible from the front side and grip behind a mounting frame in the locked position.

US 2014 0 109 484 A1 discloses an installation that requires shifting the cover panel from right to left. First, the one end of the resiliently biased spring plate is shifted to the right to grip behind a counter member on the right-hand side, and then the cover panel is shifted to the left, until the biased spring plate grips behind another counter member on the left-hand side. For dismounting the cover panel, this procedure needs to be executed in reverse order.

There is a continuous need for cover panels including an opening mechanism actuated easily in an intuitive manner and with low forces and are particularly suited for use in environments that require hygienic but safe working conditions, such as in expensive machines are in classified workspaces, such as clean rooms.

### SUMMARY OF INVENTION

According to the present invention there is provided a cover panel for machines or housings having planar surfaces, configured to be opened from a front side thereof to provide access to a back side thereof via an opening, comprising a frame defining said opening, and a cover covering the opening in a closed condition, wherein the frame is configured for retaining the cover in the frame in the closed condition, the cover is configured to be opened to an opened condition and to be removed from the frame in said opened condition, and an actuating member is provided, configured to switch the cover from the closed condition to the opened condition for removal of the cover. According to the present invention the actuating member is pivotably supported about a pivot axis extending in parallel with a plane of the cover panel, wherein pivoting the actuating member about the pivot axis drives a displacement of the cover in a direction perpendicular to the frame to the opened condition, for removal of the cover from the frame.

As the cover and the cover panel may be generally fully closed over the entire surface, with only minor gaps between the cover and frame, the cover panel according to the present invention not only provides a nice and shapely aesthetic appearance but is perfectly suited to ensure a hygienic and sterile working environment.

In the opened condition, the cover will not be fully removed from the opening, but it will usually be pivoted or swiveled about the associated pivot axis only by a relatively small angle of rotation and remain seated in the opening of the frame, so that it cannot fall out of the opening accidentally. The angle of rotation is determined by the design and configuration of the actuating member and will usually be of the order of only a few degrees.

According to a further embodiment, the actuating member may comprise an actuating portion on a first side of the pivot axis and an opening portion on a second side of the pivot axis opposite to the first side, and pivoting the actuating member about the pivot axis causes abutment of the opening portion with a rear side of the cover, wherein the abutment between these two members drives the displacement of the cover in the direction perpendicular to the frame to the opened condition, for removal of the cover from the frame. The abutment may be a direct abutment of two opposite surface, but may also be an indirect abutment, with the intermediary of an intermediate part, such as a protrusion, provided on either the rear side of the cover or the opposite surface of the opening portion of the actuating member.

According to a further embodiment, the frame may be rectangular and two actuating members may be provided on two opposite sides of the frame, said pivot axes of the actuating members being aligned with each other. Removal of the cover from the opening will thus require actuating these two actuating members in a sequential order, which helps to prevent the cover from falling out of the opening accidentally.

According to a further embodiment, each actuating member may be pivotably supported at a pivot support with the pivot axis being spaced apart from a side-wall of the cover or frame, wherein free front ends of the actuating portion and of the opening portion may protrude laterally beyond said pivot support. The distance between the actuating portion and of the opening portion, respectively, and the pivot axis will determine the angle of rotation by which the cover is rotated away from the frame of the cover panel.

According to a further embodiment, the cover may be retained at the frame by at least one fixed retaining member, which is mounted on the frame or cover and configured to retain the cover with a holding force acting perpendicular to a bottom of the frame. In general, any kind of retaining member may be considered, such as magnetic elements or even adhesive members.

According to a further embodiment, the at least one fixed retaining member may retain the cover by positive-fit with an associated counter-member mounted to a rear side of the cover or on a bottom of the frame, wherein pivoting the actuating member about the pivot axis may release the positive-fit between the at least one fixed retaining member and the associated counter-member. This enables a very controlled procedure for opening the cover.

According to a further embodiment, the positive-fit of the at least one fixed retaining member and the associated counter-member may be released when the actuating member is pivoted about the pivot axis and a rear surface of the opening portion gets in contact with the bottom of the frame.

According to a further embodiment, the at least one fixed retaining member may be a ball-catcher and a free front end of the associated counter-member may be ball-shaped.

According to a further embodiment, the cover may comprise a pushing member at a rim of the cover at a position corresponding to a position of the actuating portion of each actuating member, said pushing member being configured to be pushed resiliently downward in a direction perpendicular to a surface of the cover for driving a pivoting of the actuating portion towards a bottom of the frame.

According to a further embodiment, the pushing member may be integrally formed with the cover at a position corresponding to the position of the actuating portion of each actuating member.

According to a further embodiment, the pushing member may be mounted to a rear side of the cover at a position corresponding to the position of the actuating portion of each actuating member.

According to a further embodiment, the pushing member may be a resilient tongue formed by a U-shaped recess in the cover at a position corresponding to the position of the actuating portion of each actuating member.

According to a further embodiment, a surface of the cover may be closed at least along a periphery of the cover and an opening may be provided at a rim of the cover at a position corresponding to a position of the actuating portion of each actuating member, so that the actuating portion can be actuated by a pin of a hand tool passing through the opening and driving a pivoting of the actuating portion towards a bottom of the frame.

According to a further embodiment, a sleeve surrounding the opening may be provided on a rear side of the cover, for guiding a movement of the pin of the hand tool for driving the pivoting of the actuating portion towards a bottom of the frame. Such a sleeve may assist in further reducing the risk that contaminants may intrude into the back volume covered by the cover.

According to a further embodiment, the frame and the cover may be rectangular and two openings may be formed on two opposite sides of the cover, said two openings being aligned along and in parallel with a common side of the frame or cover. The need for just two openings for the actuating tool to actuate the actuating member will assist in further reducing the risk that contaminants may intrude into the back volume covered by the cover.

According to a further embodiment, the frame may comprise a vertical side-wall extending perpendicular to a surface of the cover and the opening of the frame is defined by four supporting strips forming a bottom of the frame and extending in parallel with the surface of the cover. The rim of the opening in the frame thus may be L-shaped, which will be of use for retaining the cover still in the frame once the actuating member(s) along one side of the cover are all switched to the opened position, to prevent the cover from falling out of the opening accidentally.

According to a further embodiment, the actuating member may be pivotably supported at a pivot support fixedly mounted to the frame.

According to further embodiments, the actuating member may also be formed integrally with the cover, e.g. as a resilient portion formed in the cover at a proper position.

According to a separate unitary aspect of the present invention there is provided a machine or housing, particularly for use in a clean room or classified room, comprising at least one cover panel as claimed as disclosed hereinafter that covers an opening in said machine our housing.

According to a separate unitary aspect of the present invention there is provided a clean room, particularly for processing of pharmaceutical packaging, comprising side-walls sealing a workspace of the clean room from an environment, characterized in that the side-walls comprise at least one cover panel as disclosed hereinunder that covers a back volume.

### TECHNICAL EFFECTS OF INVENTION

Switching the cover from its closed condition to its opened condition can be performed easily and in an intuitive manner, and will usually require only modest forces. As the end of the cover nearest to the actuating member(s) will usually be pivoted or swiveled about the associated pivot axis only by a relatively small angle of rotation, the cover will remain seated in the frame even in its opened condition, but will not fall out of the frame accidentally.

As the cover and the cover panel may be generally fully closed over the entire surface, with only minor gaps between the cover and frame, the cover panel according to the present invention not only provides a nice and shapely aesthetic appearance but is perfectly suited to ensure a hygienic and sterile working environment, particularly for clean rooms or for machines or housings for use in clean rooms. Only relatively small openings, if at all, are required in the surface of the cover near the associated actuating member. But as the associated actuating member is disposed very close to the rear side of the cover, the risk that contaminants may intrude into the back volume covered by the cover can be minimized.

A cover panel according to the present invention can be used in all kinds of applications. The cover panel according to the present invention is of a particular advantage in machines or housings for use in any working environment, particularly for use in a working environment that requires hygienic and safe working conditions, such as in a clean room or classified room.

The cover panel can be used e.g. for side-walls of a clean room, particularly of a clean room for processing of pharmaceutical packaging, that seal a classified workspace of the clean room from an environment but need to be opened to provide access to a back volume inside the side-wall for repair or maintenance of machine components, air filters and the like mounted in the back volume.

Switching the cover from the closed position to the opened position in a cover panel according to the present invention may require a hand tool with a pin of a specific cross-sectional shape closely corresponding to the shape of the opening provided in the cover of the cover panel. If required, only authorized personnel may be in the possession of such a hand tool and open and remove the cover, e.g. for repair or maintenance purposes.

### OVERVIEW ON DRAWINGS

Hereinafter, the preferred embodiments according to the present invention will be described in an exemplary manner and with reference to the accompanying drawings, wherein:
- Fig. 1a: shows a cover panel according to the present invention in a closed condition;
- Fig. 1b: shows the frame of a cover panel according to the present invention in an opened condition;
- Fig. 2a: is a comparative view showing the switching of a cover panel according to the present invention from a closed condition (shown in solid lines) to opened condition (shown in broken lines);
- Fig. 2b: is a magnified view showing the actuating member of a cover panel according to the present invention in a closed condition (shown in solid lines) and in an opened condition (shown in broken lines);
- Fig. 3a: is a perspective view showing the pivot support of a cover panel according to the present invention in a closed condition on a magnified scale, and the interaction of a hand tool with the actuating member of the cover panel for switching from the closed condition to the opened condition;
- Fig. 3b: is a perspective view showing the pivot support of a cover panel according to the present invention in an opened condition on a magnified scale;
- Figs. 4a and 4b: are greyscale views corresponding to Figs. 3a and 3b, respectively; and
- Fig. 5: shows a cover panel including a resilient tongue used for actuating the actuating member according to another embodiment of the present invention.

Throughout the drawings, the same reference numerals designate identical or technically equivalent elements or groups of elements.

### DETAILED DESCRIPTION OF PREFERRED EMBODIMENTS

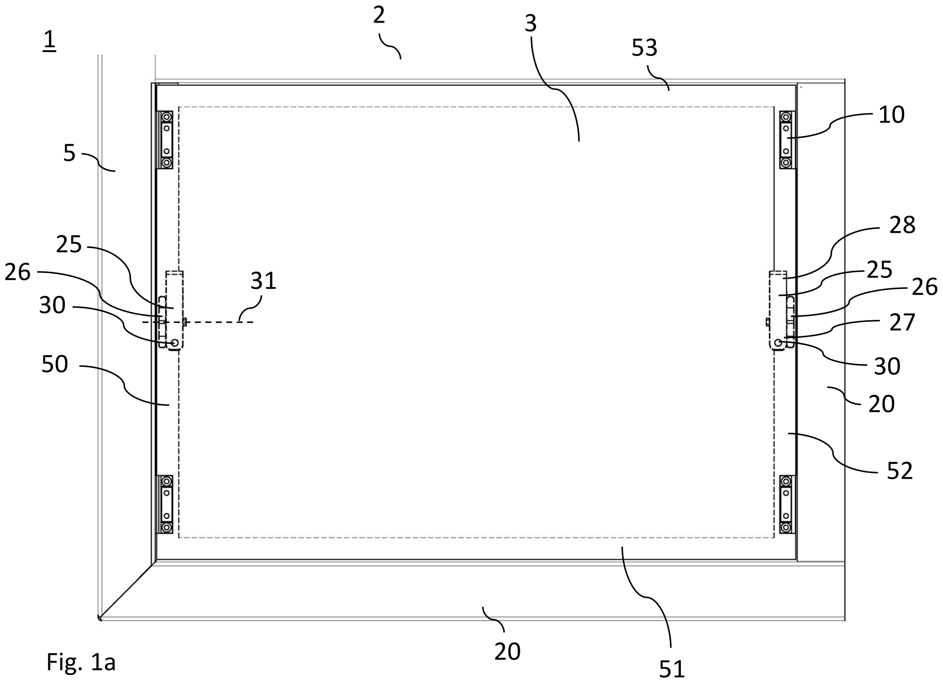

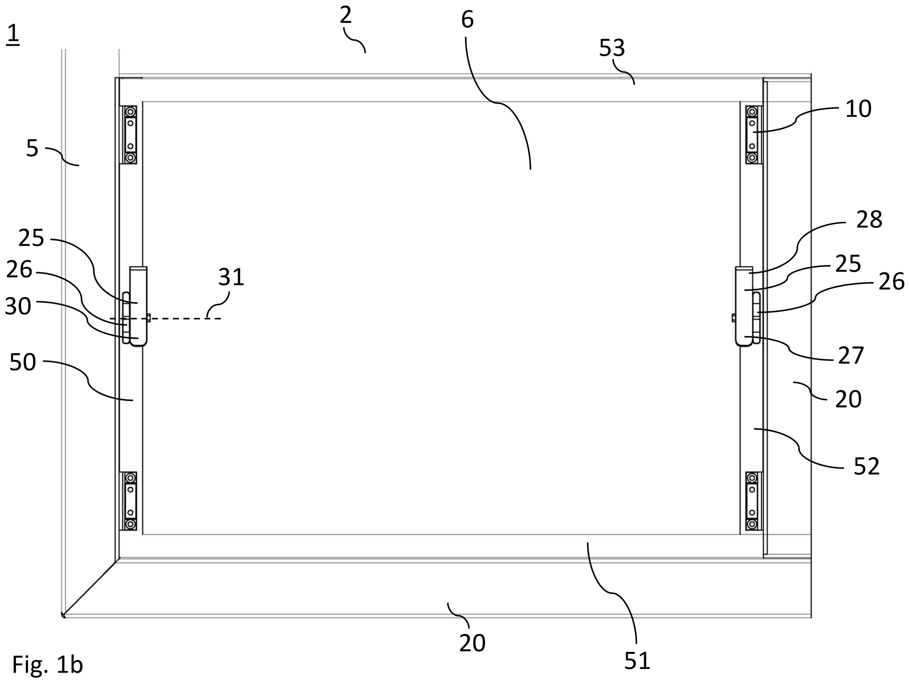

The cover panel 1 shown in Fig. 1a may be part of a lager side-wall 2, which may be a part of a machine or housing or side-wall of a clean room, but could be used for any kind of application and in many different environments. The cover panel 1 comprises a plate-shaped cover 3 that covers an opening 6 (cf. Fig. 1b). The cover 3 preferably has a planar surface and its entire surface may be closed, for sealing the underneath opening 6. In certain embodiments, the cover 3 may comprise openings or recesses, enabling a visual inspection of areas behind the cover 3 or a flow of gas to pass through, such as in the case of a filter cover for air filters in clean rooms or classified rooms.

The cover 3 is accommodated in a frame 5 that completely surrounds the cover 3. Such a frame 5 may be integrated into the larger side-wall 2 so that the surfaces of both the frame 5 and the cover 3 are flush with the other surfaces of the side-wall 2. In the embodiment shown in the drawings, both the frame 5 and the cover 3 are rectangular, more preferably with long sides and short sides of different lengths. But the present invention shall not be deemed to be delimited to such specific shapes, as e.g. ovoid, circular, or polygonal shapes of both the frame 5 and the cover 3 may be envisaged as well.

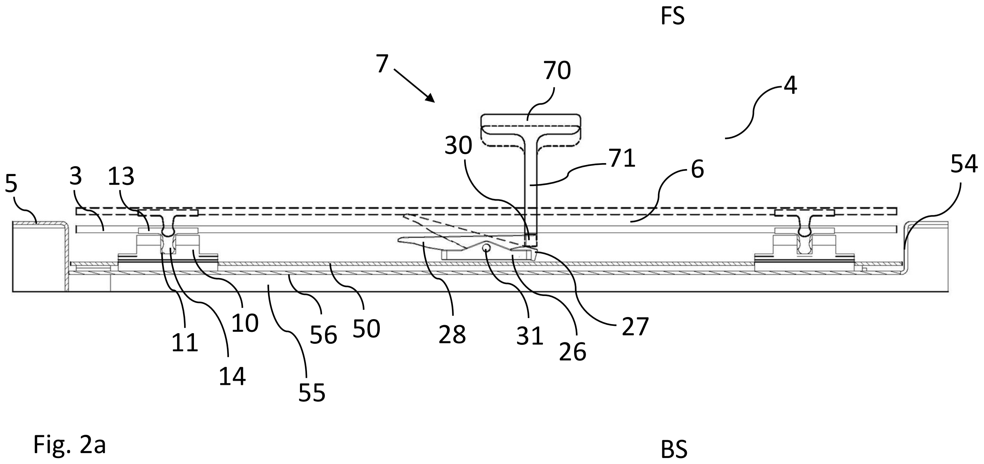

For firmly supporting the cover 3 inside the frame 5, the frame 5 may comprise four strip-shaped supporting members 50-53 and on which the rear side of the cover 3 may be supported, which together define the central opening 6 of the frame 5, and a vertical side-wall 54 (cf. Fig. 2a) connecting the front surface of frame 5 with the strip-shaped supporting members 50-53 and extending perpendicular to the front surface of frame 5.

In preferred embodiments of the invention, the cover 3 is a planar sheet-like element of a shape corresponding to the shape of the frame 5 as defined by the circumferential side-wall 54. In other embodiments, also the cover 3 may comprise a circumferential side-wall extending perpendicular to the surface of the cover 3 and towards the strip-shaped supporting members 50-53 of frame 5. The dimensions of the cover 3 may be of the order of 30cm to 100 cm in length and/or width or even larger, depending on the specific circumstances of use.

The width of any gap between the vertical side-wall 54 of frame 5 and the edges of cover 3 is kept as small as possible, such as of the order of only 1 mm or even less, to ensure a good sealing effect of cover 3, which may be important for many applications such as in clean rooms used for processing pharmaceutical packaging. In any case the gap between the vertical side-wall 54 of frame 5 and the edges of cover 3 is sufficiently large to enable a certain pivoting or swiveling of the cover 3 about the pivot axes 31, as outlined hereinafter in more detail.

For firmly holding or retaining the cover 3 in the frame 5, retaining members 10 are fixedly mounted at appropriate positions along the perimeter of the frame 5. In preferred embodiments, such retaining members 10 are positioned only on those sides of the frame 5 where the actuating members 25 for switching the cover 3 from its closed condition (shown in Fig. 1a) to its opened position (shown in Fig. 1b) are disposed.

The holding force exerted by the retaining members 10 may act in a direction perpendicular to the surface of cover 3, so that forces acting in the opposite direction are required to release or separate the cover 3 from frame 5. The retaining members 10 may be permanent magnets fixedly mounted on the frame 5 and the rear side of cover 3. According to preferred embodiments of the present invention, the retaining members 10 are positive-fit retaining members 10, such as pins, hooks or the like. As shown in Fig. 2a, such positive-fit retaining members 10 may be embodied particularly as ball-catchers, comprising a first plate 10 fixedly mounted on a supporting strip 50 of frame 5 and including a recess 11 providing a restricted portion. At a corresponding position on the opposite side (the rear side) of cover 3 a mounting plate 13 may be fixedly provided from which a protrusion including a pin 14 projects perpendicularly away from the rear side of cover 3. The pin 14 may have a ball-shaped front end that tightly matches to the restricted portion of opposite recess 11 to accomplish the afore-mentioned positive-fit, so that the cover 3 can only be removed the frame 5 if a certain minimum force is exerted in a direction perpendicular to the surface of cover 3.

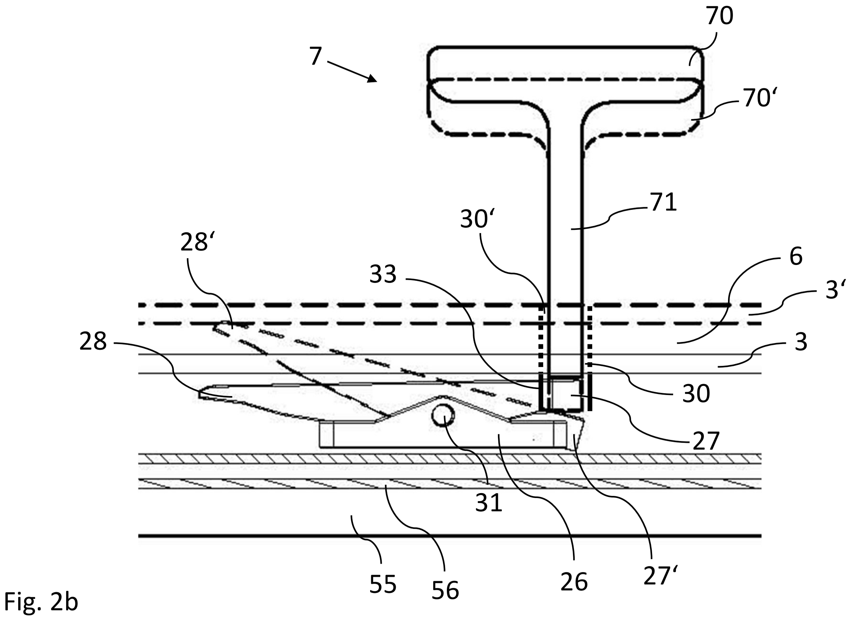

According to the present invention the forces required for releasing the cover 3 from its closed position are the result of a pivoting of an actuating member 25 that is fixedly mounted to one of the supporting strips 50-53 of frame 5 (but may also be fixedly mounted to the rear side of cover 3). More specifically, the actuating member 25 is pivotably supported on a pivot support 26 that may be shaped as a parallelepiped, each defining a pivot axis 31 extending in a direction parallel with the surface of cover 3 and perpendicular to the vertical side-wall 54 of frame 5. As can be seen in Figs. 2a and 2b, the pivot axis 31 is spaced apart, in a direction perpendicular to the surface of cover 3, both to the associated supporting strip 50 of frame 5 and to the rear side of cover 3.

Each actuating member 25 comprises an actuating portion 27, which is disposed on a first side of the pivot axis 31 and spaced apart from the pivot axis 31, and an opening portion 28, which is disposed on a second side of the pivot axis 31 opposite to said first side and spaced apart from the pivot axis 31. When a force is exerted on the actuating portion 27 in a direction perpendicular to the surface of cover 3, the actuating member 25 will swivel or pivot about pivot axis 31, causing the opening portion 28 to be displaced towards the rear side of cover 3 and finally get in contact with the rear side of cover 3. When the actuating member 25 continues swiveling or pivoting about pivot axis 31 the opening portion 28 will exert a force on the cover 3 in a direction perpendicular to the surface of cover 3 and away from the supporting strip 50 of cover 5, due to the abutment of the front end of opening portion 28 with the rear side of cover 3. Finally, the rear side of the opposite actuating portion 27 of actuating member 25 may get in contact with the supporting strip 50 of cover 5, which will end the swiveling or pivoting of actuating member 25 about pivot axis 31. As a result of this swiveling or pivoting of the actuating member 25 about pivot axis 31, the cover 3 will be displaced in a direction perpendicular to the surface of cover 3 and away from the supporting strip 50 of cover 5, and in this manner the cover 3 is switched from its closed position to an opened position. The extent of this displacement is governed by the geometry of the opening portion 28 acting as a lever and its distance to pivot axis 31 and is designed such that it is sufficient to release the cover 3 from its firm support in the frame 5, which may be the case e.g. if the afore-mentioned positive-fit of the ball-catcher is fully released or if attractive magnetic forces become too weak in the forwardly displaced opened position of cover 3.

As shown in Figs. 1a and 1b, in a preferred embodiment of the present invention two actuating members 25 are provided on two opposite sides of the frame 5, wherein the pivot axes 31 of both actuating members 25 are aligned with each other in a direction extending in parallel with the surface of cover 3 and perpendicular to the upright side-wall 54 of frame 5. The cover 3 will thus be pivoted about a common pivot axis, which is preferably provided in the middle of the corresponding side 50, 52 of frame 5, as this will result in the largest possible displacement of cover 3 in the direction perpendicular to the surface of cover 3.

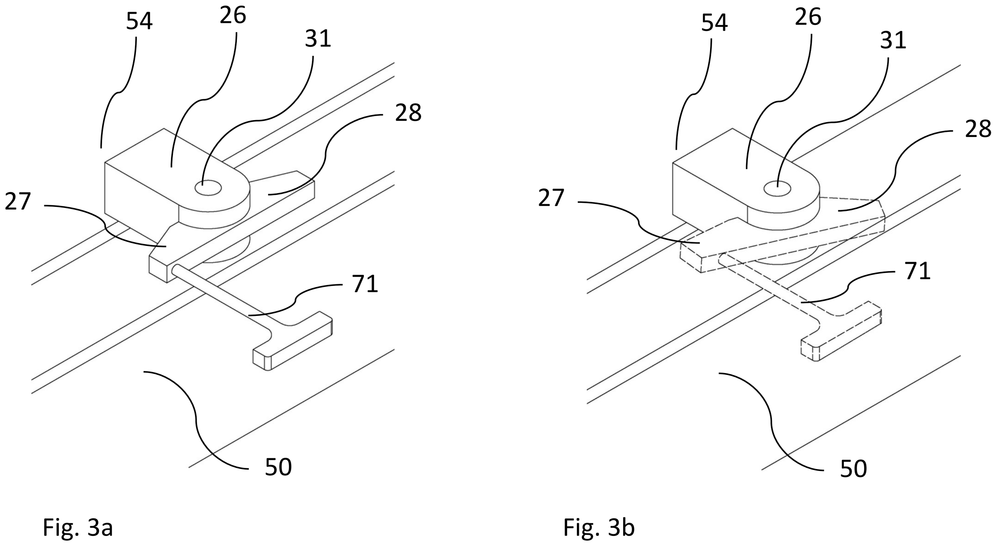

As can be seen best in Figs. 3a and 3b, the actuating member 25 may have the shape of an isosceles triangle, if viewed from above, with its basis being directed towards the opening 6 of frame 5 and its two legs of equal lengths facing the vertical side-wall 54 of frame 5, as this may enable a maximum angle for the swiveling or pivoting of the actuating member 25 about pivot axis 31. The corners of such an isosceles triangle adjacent its basis, which form the free front ends 27, 28 of the actuating member 25, are preferably rounded or block-shaped with rounded corners, so that the free front ends 27, 28 of the actuating member 25 can slide along the rear side of cover 3 and supporting strip 50, respectively, thus minimizing any friction and abrasion at the contact points.

The swiveling or pivoting of the actuating member 25 about pivot axis 31 may be the result of a repulsive magnetic from the front side FS of cover 3 exerted on actuating portion 27, which may be implemented if the actuating portion 27 includes (or is made of) a permanent magnetic material and the cover 3 is made of a non-magnetic material, such as plastic or non-magnetic stainless-steel. In such embodiments, the surface of cover 3 may be completely closed without openings.

In a preferred embodiment, however, the swiveling or pivoting of the actuating member 25 about pivot axis 31 is the result of a mechanical force exerted on the actuating portion 27 of actuating member 25 in a direction perpendicular to the surface of cover 3. For this purpose, small openings 30 may be provided at positions corresponding to the positions of the actuating portions 27 of the actuating members 25. As shown in Fig. 1a, these openings 30 are preferably provided near the rim of cover 3, whereas all other portions of cover 3 may be completely closed, as required by the specific application. As the distance between the actuating portion 27 of actuating member 25 and the rear side of cover 3 will be relatively small in the closed position of cover and because the actuating portion 27 of actuating member 25 more or less covers the rear side of the cover 3 near the opening 30, the risk of intrusion of contaminants to the back volume 55 of the cover plate 1 will nevertheless be very low.

To exert such a mechanical force in a direction perpendicular to the surface of cover 3, a hand tool 70 is required, which may be of the shape shown in Figs. 2a and 2b and have a grip 70 and a pin 71 of a cross-sectional shape corresponding to the shape of opening 30. In Figs. 2a and 2b, the positions of the relevant members of the cover panel 1 in the closed condition are shown in solid lines and the relevant members are indicated by reference numerals without apostrophe ('), whereas the positions of the relevant members of the cover panel 1 in the opened condition are shown in broken lines and the relevant members are indicated by reference numerals with apostrophe ('). Pushing the front end of pin 71 into the opening 30 of cover 3 will finally result in abutment of the free front end of pin 71 with the actuating portion 27 of actuating member 25 and in the afore-mentioned swiveling or pivoting of the actuating member 25 about pivot axis 31. The opened position of cover 3 is reached once the cover 3 is released from the retaining members 10, which may be the case e.g. when the rear surface of actuating portion 27 gets in contact with supporting strip 50 of frame 5.

As shown in Fig. 2b, a sleeve 33 surrounding the opening 30 may be provided on the rear side of the cover 3, for guiding a movement of the pin 71 of the hand tool 70 exactly in a direction perpendicular to the surface of cover 3 and towards the actuating portion 27 of actuating member 25, which is aligned with that sleeve 33. Such a sleeve 33 may also serve to further minimize the risk of intrusion of contaminants from the front side FS of cover 3 to the back volume 55 via the openings 30 of the cover 3.

In this opened position of the cover 3, the end of cover 3 on the side of the opening portions 28 of actuating member 25 (in Fig. 1b the upper end of cover 3) will be pivoted a little away from frame 5, whereas the opposite end of cover 3 will remain seated in frame 5. In the opened position the end of cover 3 on the side of the opening portions 28 of actuating member 25 will not be retained anymore by the corresponding retaining member 10, whereas the opposite end of cover 3 may still be remain retained by the corresponding retaining member 10 on the opposite end of cover 3. Thus, it is ensured that the cover 3 does not accidentally fall out of the frame 5 when switching the cover 3 from its closed position to its opened position. However, as the retaining forces of at least some of the retaining members 10 (in Fig. 1b of the upper retaining members 10) have been overcome, the cover 3 can be removed from frame 5 from this opened position easily by gripping the free end of cover 3 protruding beyond the upper surface of frame 5 (in Fig. 1b the upper end of cover 3) and fully pulling the cover 3 completely out of frame 5. After removal of cover 3 from frame 5 access is provided via the opening 6 to the back side BS of frame 5, where a bottom plate 56 may be provided for firmly holding machine components, such as air filters or motors. More generally, after removal of cover 3 a user may obtain access via opening 6 of frame 5 to a back volume 55, that is covered by cover 3 in its closed condition. Such an access may be required e.g. for repair or maintenance purposes. As the cover 3 of a cover panel 1 according to the present invention may be generally closed over its entire surface and may include only tiny openings 30, a cover panel 1 according to the present invention is particularly suited for applications, which require a clean working environment or need to maintain clean and hygienic conditions, in particular sterile conditions, over extended periods of time.

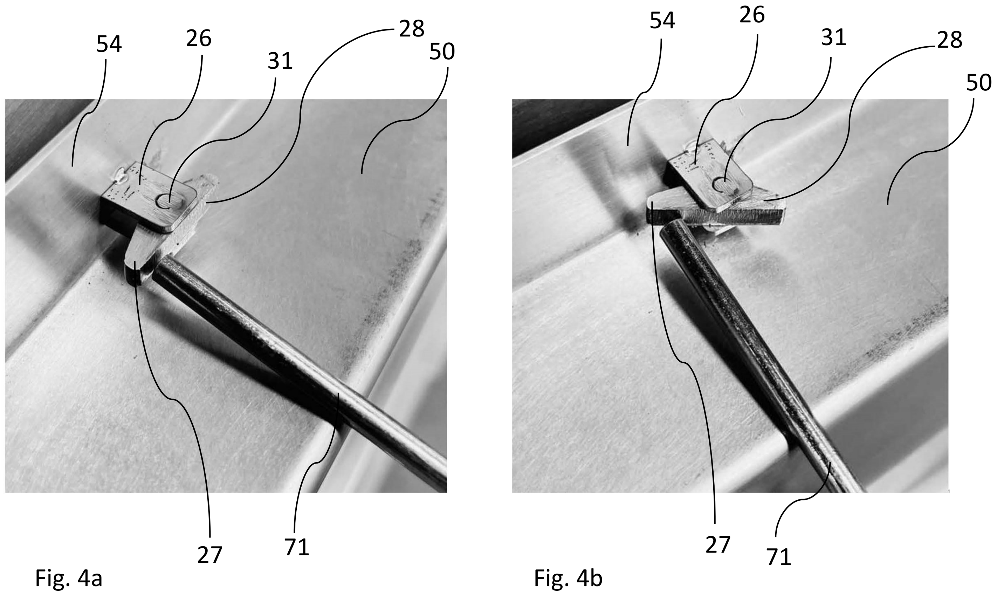

Figs. 4a and 4b are greyscale views corresponding to Figs. 3a and 3b, respectively.

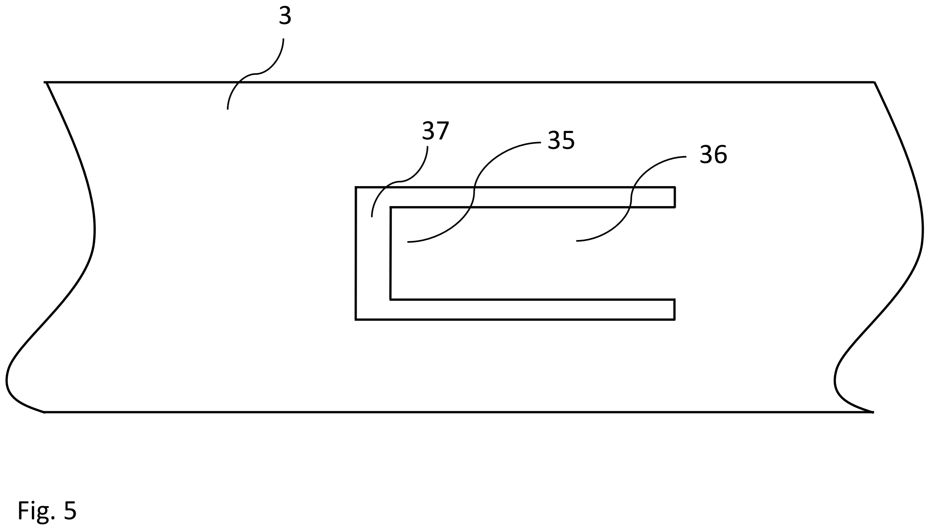

As will become apparent to the skilled person, actuating the actuating member may also be accomplished in many different ways without the use of additional tools required to be carried with by personnel. In the following, an example for an embodiment will be disclosed with reference to Fig. 5, wherein the cover 3 comprises a pushing member 35 that is integrally formed with the cover 3.

As shown in Fig. 5, at a rim of the cover 3 at a position corresponding to a position of the actuating portion of a corresponding actuating member, a pushing member 35 is formed in the cover 3 that can be pushed resiliently downward in a direction perpendicular to a surface of the cover 3 for driving a pivoting of the corresponding actuating portion towards a bottom of the frame as described above.

Here, the pushing member 35 is integrally formed with the cover 3 as a resilient tongue 36 formed by a U-shaped recess 37 in the cover 3. Pushing the resilient tongue 36 downward in a direction perpendicular to a surface of the cover 3 will cause the rear side of the resilient tongue 36 to finally get in contact with the corresponding actuating portion of the associated actuating member, and further pushing the resilient tongue 36 downward will then drive the pivoting of the corresponding actuating portion towards a bottom of the frame as described above, which will then release the cover 3 from the frame at this position.

As will become apparent to the skilled person, a pushing member may also be mounted to a rear side of the cover 3 at a position corresponding to the position of the actuating portion 27 of each actuating member 25, and pushing the cover 3 resiliently downward in a direction perpendicular to a surface of the cover 3 at this position may then be used for driving the pivoting of the corresponding actuating portion towards a bottom of the frame as described above, which will then release the cover 3 from the frame at this position. Such a pushing member may be implemented e.g. as a narrow cylindrical member mounted to the rear side of the cover 3 by gluing or welding and have a proper length so as to basically bridge the gap between the rear side of the cover 3 and the opposite surface of the actuating portion of the associated actuating member. This embodiment will require that the cover 3 is resilient at least at the position of the pushing member, which can be accomplished easily e.g. by forming the cover 3 at least at this position of a resilient sheet material such as thin metal sheet or thin plastic sheet material. In such embodiments, where the pushing member is formed integrally with the cover 3, there will be no need at all for providing and opening for actuating the actuating portion of the actuating member.

Accordingly, a cover panel according to the present invention can be used for a machine or housings or side-walls or ceilings for use in any working environment, particularly for use in a clean room or classified room.

According to the present invention, side-walls of a clean room, particularly of a clean room for processing of pharmaceutical packaging, that seal a classified workspace of the clean room from an environment may include at least one cover panel as outlined above. Such a cover panel may be used to cover a back volume, where important machine components, such as air filters or fans for generating a laminar flow inside the classified workspace, are mounted. In operation, any abrasion or dust caused by such machine components will remain inside the back volume and not contaminate the classified workspace. If required, the cover panel may be opened by removal of the cover as outlined above to provide access to the back volume, e.g. for repair or maintenance purposes. Switching the cover from the closed position to the opened position may require a hand tool with a pin of a specific cross-sectional shape closely corresponding to the shape of the opening provided in the cover. If required, only authorized personnel may be in the possession of such a hand tool and remove the cover, e.g. for repair or maintenance purposes. Of course, the cross-sectional shape of the pin of the hand-tool may be of any shape, such as triangular, polygonal, ovoid.

Switching the cover from its closed condition to its opened condition can be performed easily and in an intuitive manner, and will usually require only modest forces. As the end of the cover nearest to the actuating member(s) will usually be pivoted about the associated pivot axis only by a relatively small angle of rotation, the cover will remain seated in the frame even in its opened condition, and will not fall out of frame accidentally.

As the cover and the cover panel may be generally fully closed over its entire surface, with only minor gaps between the cover and frame, the cover panel according to the present invention can provide a nice and shapely aesthetic appearance, as the surface of the cover can be flush with the surface of the frame and all other portions of a side-wall which includes the cover panel. A cover panel according to the present invention is thus perfectly suited to ensure a hygienic and sterile working environment, particularly for clean rooms.

As will become apparent to the skilled person, a cover of a cover panel according to the present invention does not need to be planar over its entire surface. Also, arbitrary 3D-shapes of such cover panels may be possible, particularly those without discontinuous surface portions, e.g. step-shaped portions. Both the cover and the frame may be made of any mechanically stable material, such as plastic or metal, but metallic materials will be preferred, such as metal sheets made of stainless-steel.

### LIST OF REFERENCE NUMERALS

- 1: cover panel
- 2: side-wall
- 3: cover
- 3': cover in opened position
- 4: workspace volume
- 5: frame
- 6: opening
- 7: hand tool

- 10: retaining member
- 11: recess

- 13: plate
- 14: pin

- 20: rim

- 25: actuating member
- 26: pivot support
- 27: actuating portion
- 27': actuating portion in opened position
- 28: opening portion
- 28': opening portion in opened position

- 30: actuating zone / opening
- 30': opening in opened position
- 31: pivot axis

- 33: sleeve

- 35: resilient tongue
- 36: front end of resilient tongue
- 37: recess

- 50: supporting strip
- 51: supporting strip
- 52: supporting strip
- 53: supporting strip
- 54: side-wall of frame 5
- 55: back volume
- 56: bottom plate

- 70: grip
- 70': grip in opened position
- 71: pin

- FS: front side
- BS: back side

## Claims

1. A cover panel (1) for covering an opening (6), configured to be opened from a front side (FS) thereof for removal to provide access to a back side (BS) thereof via the opening (6), comprising
a frame (5) defining said opening (6), and
a cover (3) covering the opening in a closed condition, wherein
the frame (5) is configured for retaining the cover (3) in the frame (5) in the closed condition,
the cover (3) is configured to be opened to an opened condition and to be removed from the frame (5) in said opened condition, and
an actuating member (25) is provided, configured to switch the cover (3) from the closed condition to the opened condition for removal of the cover (3);
**characterized in that** the actuating member (25) is pivotably supported about a pivot axis (31) extending in parallel with a plane of the cover panel (1), wherein
pivoting the actuating member (25) about the pivot axis (31) drives a displacement of the cover (3) in a direction perpendicular to the frame (5) to the opened condition, for removal of the cover (3) from the frame (5).

2. The cover panel as claimed in claim 1, wherein
the actuating member (25) comprises an actuating portion (27) on a first side of the pivot axis (31) and an opening portion (28) on a second side of the pivot axis (31) opposite to the first side, and
pivoting the actuating member (25) about the pivot axis (31) causes abutment of the opening portion (28) with a rear side of the cover (3), for driving the displacement of the cover (3) in the direction perpendicular to the frame (5) to the opened condition, for removal of the cover (3) from the frame (5).

3. The cover panel as claimed in any of the preceding claims, wherein the frame (5) is rectangular and two actuating members (25) are provided on two opposite sides of the frame (5), said pivot axes (31) of the actuating members (25) being aligned with each other.

4. The cover panel as claimed in any of the preceding claims, wherein each actuating member (25) is pivotably supported at a pivot support (26) with the pivot axis (31) being spaced apart from a side-wall of the cover (3) or frame (5), wherein free front ends of the actuating portion (27) and of the opening portion (28) protrude laterally beyond said pivot support (26).

5. The cover panel as claimed in claim 4, wherein the cover (3) is retained at the frame (5) by at least one fixed retaining member (10), which is mounted on the frame (5) or cover (3) and configured to retain the cover (3) in the closed position in the frame (5) with a holding force acting perpendicular to a bottom (50) of the frame (5).

6. The cover panel as claimed in claim 5, wherein the at least one fixed retaining member (10) is configured to retain the cover (3) by positive-fit with an associated counter-member (14) mounted to a rear side of the cover (3) or on a bottom of the frame (5), wherein pivoting the actuating member (25) about the pivot axis (31) releases the positive-fit between the at least one fixed retaining member (10) and the associated counter-member (14).

7. The cover panel as claimed in claim 6, wherein the at least one fixed retaining member (10) is configured to release the positive-fit of the at least one fixed retaining member (10) and the associated counter-member (14) when the actuating member (25) is pivoted about the pivot axis (31) and a rear surface of the opening portion (28) gets in contact with the bottom (50) of the frame (5).

8. The cover panel as claimed in any of the preceding claims, wherein the cover (3) comprises a pushing member (35) at a rim of the cover (3) at a position corresponding to a position of the actuating portion (27) of each actuating member (25), said pushing member (35) being configured to be pushed resiliently downward in a direction perpendicular to a surface of the cover (3) for driving a pivoting of the actuating portion (27) towards a bottom (50) of the frame (5).

9. The cover panel as claimed in claim 8, wherein the pushing member (35) is integrally formed with the cover (3) at a position corresponding to the position of the actuating portion (27) of each actuating member (25), and wherein
the pushing member (35) is mounted to a rear side of the cover (3) at a position corresponding to the position of the actuating portion (27) of each actuating member (25), or
the pushing member (35) is a resilient tongue (36) formed by a U-shaped recess (37) in the cover (3) at a position corresponding to the position of the actuating portion (27) of each actuating member (25).

10. The cover panel as claimed in any of claims 1 to 8, wherein a surface of the cover (3) is closed at least along a periphery of the cover (3) and an opening (30) is provided at a rim of the cover (3) at a position corresponding to a position of the actuating portion (27) of each actuating member (25), so that the actuating portion (27) can be actuated by a pin (71) of a hand tool (7) passing through the opening (30) and driving a pivoting of the actuating portion (27) towards a bottom (50) of the frame (5).

11. The cover panel as claimed in claim 10, wherein a sleeve (33) surrounding the opening (30) is provided on a rear side of the cover (3), for guiding a movement of the pin (71) of the hand tool (7) for driving the pivoting of the actuating portion (27) towards a bottom (50) of the frame (5).

12. The cover panel as claimed in claim 10 or 11, wherein the frame (5) and the cover (3) are rectangular and two openings (30) are formed on two opposite sides of the cover (3), said two openings (30) being aligned along and in parallel with a common side (51, 53) of the frame (5) or cover (3).

13. The cover panel as claimed in claim 12, wherein the frame (5) comprises a vertical side-wall (54) extending perpendicular to a surface of the cover (3) and the opening (6) of the frame is defined by four supporting strips (50-53) forming a bottom of the frame (5) and extending in parallel with the surface of the cover (3).

14. The cover panel as claimed in any of the preceding claims, wherein the actuating member (25) is pivotably supported at a pivot support (26) fixedly mounted to the frame (5).

15. A use of a cover panel (1) as claimed in any of the preceding claims
as part of a cover of a machine or housing, in particular of a machine or housing for use in a clean room, that covers an opening (6) in said machine our housing, or
as part of a side-wall in a clean room, in particular in a clean room for processing of pharmaceutical packaging, sealing a workspace of the clean room from an environment, said side-wall covering a back volume (55).
